# EUROPEAN PATENT SPECIFICATION

(11) **EP 3 139 770 B1**
(45) Date of publication and mention of the grant of the patent: **28.02.2018**
(21) Application number: 15713746.4
(22) Date of filing: 31.03.2015
(51) Int. Cl.: A23L 5/00, A23L 29/00, C11B 1/00, C11B 3/00

(54) **FATTY ACID COMPOSITION, METHOD FOR THE PRODUCTION THEREOF AND USE THEREOF**
FETTSÄUREZUSAMMENSETZUNG, VERFAHREN ZUR HERSTELLUNG DAVON UND VERWENDUNG DAVON
COMPOSITION D'ACIDE GRAS, SON PROCÉDÉ DE PRODUCTION ET SON UTILISATION

(30) Priority: 04.04.2014 EP 14163603
(43) Date of publication of application: 15.03.2017
(73) Proprietor: Loders Croklaan B.V., 1521 AZ Wormerveer (NL)
(72) Inventor: 'T ZAND, Imro, Johor Bahru 81100 (MY); BHAGGAN, Krishnadath, NL-1521 AZ Wormerveer (NL); MA, Jun, NL-1521 AZ Wormerveer (NL)
(74) Representative: Potter Clarkson LLP
(86) International application number: PCT/EP2015/057073
(87) International publication number: WO 2015/150405

(56) References cited:
- WO-A1-94/26855
- WO-A1-03/037095
- GB-A- 2 239 256

## Description

This invention relates to a fatty acid composition, to a process for producing the composition and to the use of the composition in the preparation of triglycerides.

Triglyceride fats and oils are important components of many edible products. Fats and oils used in the food industry are frequently provided from vegetable sources such as sunflower and palm. Triglyceride fats can also be produced by the reaction of fats and oils with fatty acids; this allows the physical properties of the triglycerides, such as hardness and melting point, to be controlled. For example, the hydrogenation of oils to convert unsaturated fatty acids to saturated fatty acids, which can lead to the formation of unwanted *trans* fatty acids, can be avoided by transesterifying the oil with a saturated fatty acid so as to introduce saturated fatty acids into the triglyceride.

Stearic acid occurs in many animal and vegetable fats and oils, but it is more abundant in animal fat than vegetable fat. The exceptions are cocoa butter, shea butter and some other vegetable oil sources such as mango kernel, sal and illipe, where the stearic acid content (as a triglyceride) is typically 28 to 45 %. See: http://en.wikipedia.org/wiki/Stearic_acid. Stearic acid can be prepared by treating these fats and oils with water at a high pressure and temperature, leading to the hydrolysis of triglycerides. The resulting mixture is then distilled.

US 2589148 describes the separation of mixtures of fatty acids obtained by the hydrolysis of natural fats and oils.

WO 2004/111164 relates to a method of hydrolyzing a glycerol fatty acid ester-containing composition, such as a fat and/or an oil, to produce fatty acids having a low proportion of *trans* fatty acids.

EP-A-1001007 concerns concentrates of shea sterols in glycerides with more than 12.5 weight % shea sterols, their preparation by enzymic hydrolysis of glycerides in shea oils or fractions thereof and the application of the concentrates in aerated food products.

GB-A-2239256 discloses transesterified margarine oil products having smooth mouthfeel and broad melting range characteristics which contain very low C8-C16 saturated fatty acids and low trans-unsaturated fatty acid content, as well as enzymatic methods for preparing such margarine oil products.

According to the present invention, there is provided a fatty acid composition comprising:
(i) from 60% to 80% by weight stearic acid;
(ii) from 3% to 30% by weight oleic acid; and
(iii) less than 10% by weight palmitic acid.

The term fatty acid, as used herein, refers to straight chain saturated or unsaturated (including mono-, di- and poly- unsaturated) carboxylic acids having from 12 to 22 carbon atoms. The term fat refers generally to compositions that contain a mixture of fatty acid glycerides.

Also provided by the invention is a process for producing the fatty acid composition of the invention, comprising the enzymic hydrolysis of a triglyceride.

In another aspect, the invention provides the use of a composition of the invention in the preparation of a triglyceride.

Further provided by the invention is a method for the preparation of a first triglyceride comprising an enzymic acidolysis reaction between: a fat with at least 30% by weight of oleic acid in the 2- (i.e., sn-2) position based on total C12 to C22 fatty acids at the 2-position; and the fatty acid composition of the invention.

The invention also provides a method for the preparation of a second triglyceride comprising an enzymic acidolysis reaction between: a fat with at least 50% by weight of C12-C22 saturated fatty acids in the 2- position based on total C12 to C22 fatty acids at the 2- position; and a second fatty acid composition obtainable by the process of the invention and comprising greater than 63% by weight oleic acid, greater than 4% by weight linoleic acid and greater than 2% by weight stearic acid.

It has been found that compositions of the invention are particularly suitable for the formation of triglycerides (e.g., the first triglyceride) that can act as cocoa butter equivalents. They can form a cocoa butter equivalent that exhibits a closely similar melting profile to cocoa butter.

The fatty acid composition of the invention comprises at least 85 % by weight free fatty acids, more preferably at least 90 % by weight free fatty acids, such as at least 95 % by weight free fatty acids. The balance of the composition typically includes minor components such as glycerides.

The fatty acid composition is preferably non-hydrogenated i.e., the composition will not have been subjected to a hydrogenation step during its production from its natural source e.g., as a vegetable oil. The *trans* fatty acid content of the fatty acid composition is therefore typically less than 1 % by weight, more preferably less than 0.5 % by weight.

The fatty acid compositions of the invention comprise from 60 % to 80 % by weight stearic acid, more preferably from 61 to 75 % by weight stearic acid, such as from 62 to 72 % by weight stearic acid.

The fatty acid compositions of the invention comprise from 3 % to 30 % by weight oleic acid, preferably from 10 to 29 % by weight oleic acid, such as from 15 to 28 % by weight oleic acid.

The fatty acid compositions of the invention comprise less than 10% by weight palmitic acid, preferably from 2 to 7 % by weight palmitic acid, such as from 4 to 6 % by weight palmitic acid.

Preferably, the fatty acid compositions comprise from 1 to 5 % by weight linoleic acid, such as from 2 to 4 % by weight linoleic acid.

Preferably, the fatty acid compositions comprise from 1 to 3 % by weight arachidic acid, such as from 1 to 2 % by weight arachidic acid.

A preferred fatty acid composition of the invention comprises from 60 % to 80 % by weight stearic acid, from 10 to 30 % by weight oleic acid, from 2 to 7 % by weight palmitic acid, from 1 to 5 % by weight linoleic acid, and from 1 to 3 % by weight arachidic acid.

The fatty acid composition of the invention is preferably obtainable from shea butter or its fractions, more preferably shea olein. Most preferably, the content of stearic acid in the shea olein is from 20 to 40 % by weight based on total fatty acids present and the content of oleic acid is from 45 to 65 % by weight based on total fatty acids present. It will be appreciated that when referring to the shea olein, the fatty acid content refers to fatty acids including those bound in glycerides.

The process of the invention for producing the fatty acid composition of the invention comprises the enzymic hydrolysis of a triglyceride.

Preferably, the process of the invention also produces a second fatty acid composition comprising greater than 63% by weight oleic acid, greater than 4% by weight linoleic acid and greater than 2% by weight stearic acid.

More preferably, the second fatty acid composition comprises from 63 to 80 % by weight oleic acid, from 5 to 20 % by weight linoleic acid and from 5 to 20 % by weight stearic acid.

The second fatty acid composition comprises at least 90 % by weight free fatty acids, more preferably at least 95 % by weight free fatty acids, such as at least 98 % by weight free fatty acids. The balance of the composition typically includes minor components such as glycerides.

The second fatty acid composition preferably comprises from 65 to 75 % by weight oleic acid, such as from 66 to 70 % by weight oleic acid.

Preferably, the second fatty acid composition comprises from 5 to 15 % by weight linoleic acid, such as from 8 to 12 % linoleic acid.

The second fatty acid composition preferably comprises from 5 to 20 % by weight stearic acid, such as from 8 to 15 % by weight stearic acid.

The second fatty acid composition may also comprise from 1 to 10 % by weight palmitic acid, more preferably from 4 to 8 % by weight palmitic acid.

The second fatty acid composition typically comprises from 0.5 to 2 % by weight of arachidonic acid.

A preferred second fatty acid composition comprises from 63 to 75 % by weight oleic acid, from 5 to 15 % by weight linoleic acid, from 5 to 20 % by weight stearic acid, from 1 to 10 % by weight palmitic acid, and from 0.5 to 2 % by weight of arachidonic acid.

The process of the invention preferably comprises:
a) hydrolyzing a fat comprising at least 20% stearic acid based on the weight of the fatty acids present in the fat;
b) distillation of the product of step a); and
c) fractionation of the product of step b).

A particularly preferred process of the invention comprises:
a) hydrolyzing a fat comprising at least 20% stearic acid based on the weight of the fatty acids present in the fat;
b) distillation of the product of step a); and
c) fractionation of the product of step b),
wherein the fractionation in c) produces: a first fatty acid composition comprising greater than 60% by weight stearic acid, from 3% to 30% by weight oleic acid and less than 10% by weight palmitic acid; and a second fatty acid composition comprising greater than 63% by weight oleic acid, greater than 4% by weight linoleic acid and greater than 2% by weight stearic acid.

Even more preferably, the process comprises:
a) hydrolyzing a fat comprising at least 20% stearic acid based on the weight of the fatty acids present in the fat;
b) distillation of the product of step a); and
c) fractionation of the product of step b),
wherein the fractionation in c) produces: a first fatty acid composition comprising from 60 % to 80 % by weight stearic acid, from 10 to 30 % by weight oleic acid, from 2 to 7 % by weight palmitic acid, from 1 to 5 % by weight linoleic acid, and from 1 to 3 % by weight arachidic acid; and a second fatty acid composition comprises from 63 to 75 % by weight oleic acid, from 5 to 15 % by weight linoleic acid, from 5 to 20 % by weight stearic acid, from 1 to 10 % by weight palmitic acid, and from 0.5 to 2 % by weight of arachidonic acid.

The hydrolysis in a) preferably involves the hydrolysis of the fat to release at least 50 % by weight of the fatty acids that are present in glycerides in the fat as free fatty acids. Preferably, at least 60 % by weight of the fatty acids in the fat are released, more preferably at least 70 % by weight, such as at least 75 % by weight.

The hydrolysis in a) can be carried out chemically or enzymically. The hydrolysis in a) is preferably carried out using one or more lipase enzymes. The enzyme or mixture of enzymes is non-specific to allow for hydrolysis at the 1-, 2- and 3- positions in the glyceride.

Preferably, the hydrolysis in a) is carried out in the presence of water, more preferably in an amount of from 1 to 50 % by weight. The hydrolysis is typically carried out at a temperature of from 20 to 60 °C for from 1 hour up to about 30 hours.

The fat used in step a) is preferably shea butter and/or a fraction thereof, more preferably shea olein. When shea olein is used, the content of stearic acid in the shea olein is preferably from 20 to 40 % by weight based on total fatty acids present and the content of oleic acid is from 45 to 65 % by weight based on total fatty acids present. Again, it will be appreciated that when referring to the shea olein, the fatty acid content refers to fatty acids including those bound in glycerides.

The product obtained in a) is typically extracted from the reaction mixture (for example, by removal of the aqueous phase) and optionally dried. This product is distilled in b), for example by short path distillation, in order to separate free fatty acids from any unhydrolysed glycerides. The free fatty acids are collected as the distillate. Suitable distillation conditions are a temperature of 180 to 220 °C and a pressure of from 1 x 10⁻³ to 10 x 10⁻³ mbar.

The product of b) is fractionated in c). Fractionation can be wet or dry and is preferably dry (i.e., without added solvent). Fractionation is preferably carried out at a temperature in the range of from 30 to 45 °C. The cooling rate is preferably from 3 to 6 °C per hour, more preferably followed by a holding time of from 5 to 10 hours. The fractionation in c) forms a stearin fraction that is the first fatty acid fraction of the invention and an olein fraction that is the second fatty acid fraction of the invention. The first and second fatty acid fractions are then separated, for example by filter pressing.

The first and second fatty acid compositions of the invention may be used in the preparation of triglycerides.

The invention provides a method for the preparation of a first triglyceride comprising an enzymic acidolysis reaction between: a fat with at least 30% by weight of oleic acid in the 2- position based on total C12 to C22 fatty acids at the 2- position; and the fatty acid composition of the invention.

Preferably, the fat with at least 30% by weight of oleic acid in the 2- position based on total C12 to C22 fatty acids at the 2- position is a palm mid-fraction. The weight ratio of the fat to the fatty acid composition is preferably in the range of from 2:1 to 1:2, more preferably from 1.2:1 to 1:1.2.

The method is typically carried out using a lipase, preferably a 1,3 specific lipase. A small amount of water is preferably present, such as in an amount of from 0.05 to 5 % by weight of the reaction mixture.

Excess fatty acids may be removed from the triglyceride by distillation, for example short path distillation.

The product of the enzymic acidolysis reaction, optionally after any distillation, is preferably fractionated. Fractionation may be wet or dry but is preferably solvent (i.e., wet) fractionation, more preferably in the presence of acetone. The fractionation is preferably carried out to provide the first triglyceride as a mid-fraction. A first solvent fractionation is carried out, preferably at a temperature of from 5 to 15 °C, solids are removed and the olein (liquid, supernatant fraction) is collected. A second fractionation of this olein fraction is carried out, preferably at a temperature in the range of from 15 to 30 °C, such as from 20 to 25 °C, and a stearin fraction is collected as the triglyceride product. The yield of the final triglyceride after fractionation is preferably from 40 to 70 % by weight, more preferably from 50 to 65 % by weight. The first triglyceride may be used as a cocoa butter equivalent i.e., as a substitute for cocoa butter or as an additive to cocoa butter. For example, the first triglyceride may be used in a confectionery coating, bar or filling, e.g., together with components such as sugar and/or cocoa powder.

Also provided by the invention is a method for the preparation of a second triglyceride comprising an enzymic acidolysis reaction between: a fat with at least 20-40% by weight of C12-C22 saturated fatty acids in the 2- position based on total C12 to C22 fatty acids at the 2- position; and a second fatty acid composition comprising greater than 63 % by weight oleic acid, greater than 4 % by weight linoleic acid and greater than 2 % by weight stearic acid.

The second triglyceride produced from the second fatty acid composition preferably comprises 1,3-dioleoyl-2-palmitoyl glyceride (OPO).

The fat with at least 20-40% by weight of C12-C22 saturated fatty acids in the 2- position based on total C12 to C22 fatty acids at the 2- position preferably has at least 50% palmitic acid at the 2- position based on total fatty acids at the 2- position. It will be appreciated that the palmitic acid present in the fat is bound in glycerides, including triglycerides. A preferred fat having at least 20-40%% by weight of C12-C22 saturated fatty acids in the 2- position based on total C12 to C22 fatty acids at the 2- position is palm oil stearin.

The method comprising the enzymic acidolysis reaction between the fat and the second fatty acid composition may be carried out as described in WO 2007/029015. Thus, the method may be carried out in the presence of an enzyme, preferably a 1,3 specific lipase. Under the influence of the 1,3 lipase, oleoyl residues are introduced into the 1- and 3- positions of the triglyceride by exchange with the fatty acid residues of the triglyceride. The 2-palmitoyl triglycerides modified in this way may be separated from the reaction mixture. The reaction in the process of the present invention selectively exchanges palmitic acid with oleic acid on the 1,3-position rather than the 2-position. The transesterification reaction is performed to reach or approach equilibrium at a conversion ratio to 1,3-dioleoyl 2-palmitoyl glyceride of a minimum of 50 %, preferably at least 60 %, most preferably at least 70 % by moles based on the starting triglyceride. Preferably, palm oil stearin is, for example, mixed with the second fatty acid composition at a weight ratio of palm oil stearin to oleic acid of preferably from 0.1:1 to 2:1, more preferably from 0.4:1 to 1.2:1, even more preferably from 0.4:1 to 1:1, most preferably from 1:1.1 to 1:2 on a weight basis. The reaction is preferably carried out at a temperature from 30°C to 90°C, preferably from 50°C to 80°C, such as around 60°C to 70°C, and may be conducted batchwise or in continuous fashion, with or without a water-immiscible organic solvent. Before the reaction, the humidity is preferably controlled to a water activity between 0.05 and 0.55, preferably between 0.1 and 0.5, depending on the type of biocatalyst enzyme system used. The reaction may be performed, for example, at 60 °C in a stirred tank or in a packed bed reactor over biocatalysts, based on concentrates of Lipase D (*Rhizopus oryzae,* previously classified as *Rhizopus delemar*, from Amano Enzyme Inc., Japan) or immobilised concentrates of *Rhizomucor miehei* (Lipozyme RM IM from Novozymes, Denmark). The product obtained is preferably subjected to a further step in which it is purified. In order to separate the fatty acids and esters from the product triglyceride fraction, the composition (optionally after further treatment, such as isolation of the fat phase) may be distilled at low pressure (< 10 mbar) and elevated temperatures (>200 °C).

After distillation of the composition, the triglyceride fraction is preferably fractionated to recover the OPO-containing glyceride. This can be done using solvent fractionation or dry fractionation, using a single, two-step or multi-step fractionation technique, but is preferably carried out using single step dry fractionation. Fractionation preferably removes the unconverted tripalmitins down to a level of less than 15 weight %, more preferably less than 10 weight %, most preferably less than 8 weight %. The product is typically fully refined to remove all remaining fatty acids and contaminants to produce a refined OPO fraction. Fractionation preferably comprises a hold temperature in the range of from 37 to 47°C. The stearin formed during fractionation is preferably separated from the olein by filtration, for example by filter pressing. The yield of the desired olein is preferably in the range of from 70 to 95 % by weight.

The method may comprise one or more additional steps of further purifying the product with respect to 1,3-dioleoyl 2-palmitoyl glyceride.

The second triglyceride that is produced by the process of the present invention may comprise OPO glycerides preferably in an amount of at least 10 % by weight or at least 20% by weight. The balance typically comprises other non-OPO triglycerides.

The second triglyceride may be used, for example, as a fat component in an infant formula.

The listing or discussion of an apparently prior-published document in this specification should not necessarily be taken as an acknowledgement that the document is part of the state of the art or is common general knowledge.

Preferences and options for a given aspect, embodiment, feature or parameter of the invention should, unless the context indicates otherwise, be regarded as having been disclosed in combination with any and all preferences and options for all other aspects, embodiments, features and parameters of the invention. For example, the preferred features of the first and second fatty acid compositions may be applied to the process of the invention and the methods of the invention for producing the first and second triglycerides.

The following non-limiting examples illustrate the invention and do not limit its scope in any way. In the examples and throughout this specification, all percentages, parts and ratios are by weight unless indicated otherwise. For example, percentages by weight of the fatty acids in the first and second fatty acid compositions are based on the percentage of the respective free fatty acid in the total weight of the composition.

### EXAMPLES

### Example 1

Shea olein was fully hydrolyzed enzymatically. The reaction was catalyzed by a mixture of lipases, Lipase Amano G and Lipase Amano AY.

About 4 kg of shea olein was mixed with 1.2 kg of demineralized water (30% wt) and the mixture was stirred at 40°C until a homogeneous emulsion was obtained. To this emulsion was added 2 gram of Lipase Amano AY and 1.6 gram of Lipase Amano G and the mixture was stirred for an additional 24 hours at 40°C. After this, the reaction was stopped by heating the reaction mixture to 80°C and stirring at this temperature for at least 30 min. Thereafter the stirring was stopped, settled down and the water phase was removed. The free fatty acid containing product was washed with 1.0 kg hot demineralized water and dried under vacuum. The dried fatty acid containing product was distilled in order to separate the free fatty acids from the unhydrolyzed glycerides by means of short path distillation at a temperature of about 195°C and a pressure of about 4 x 10⁻³ mbar. The free fatty acids were collected as distillate. The fatty acid composition of the products is given in Table 1.

**Table 1. Fatty acid composition of shea olein and fractions of shea olein after enzymatic hydrolysis and distillation**

| | Enzymatic hydrolysis of shea olein | | Short path distillation of fatty acid containing product | |
|---|---|---|---|---|
| | before hydrolysis | after hydrolysis | Residue | Distillate |
| FFA content | 0.03 | 79 | 2.48 | 95 |
| FAME analysis | | | | |
| C12:0 | 0.2 | 0.2 | 0.2 | 0.2 |
| C14:0 | 0.1 | 0.1 | 0.1 | 0.1 |
| C16:0 | 5.5 | 5.5 | 5.4 | 5.7 |
| C18:0 | 29.6 | 29.4 | 34.8 | 28.7 |
| C18:1 | 53.4 | 53.3 | 46.8 | 54.4 |
| C18:2 | 8.7 | 8.6 | 7.4 | 8.9 |
| C18:3 | 0.2 | 0.2 | 0.1 | 0.1 |
| C20:0 | 1.3 | 1.2 | 2.6 | 1.1 |
| C20:1c | 0.4 | 0.4 | 0.8 | 0.4 |
| C22:0 | 0.2 | 0.1 | 0.3 | 0.1 |
| trans | 0.4 | 0.3 | 0.3 | 0.3 |
| SAFA | 36.9 | 36.8 | 43.8 | 36.1 |
| MUFA | 53.9 | 53.9 | 47.7 | 54.8 |
| PUFA | 8.9 | 8.8 | 7.5 | 9 |

| | | | | |
|---|---|---|---|---|
| In this and other tables, Cx:y refers to a fatty acid having x carbon atoms and y double bonds; c refers to cis fatty acids; levels determined by GC-FAME | | | | |

### Example 2

The distillate obtained in Example 1 was dry-fractionated using a lab-scale crystallizer. To achieve a workable amount, several batches were produced. The fraction was performed at three different temperatures in the range of from 30°C to 45°C.

About 500 gram of the distillate was put in the crystallizer and heated to 70°C in order to erase any crystal memory. After this the oil was cooled to 40-35°C at a cooling rate of about 4.3-5°C /hour.
After this the obtained slurry was stabilized at the final temperature for about 7 hours and the formed crystals were separated from the olein fraction by using a lab-scale filter press. The pressing program used was as follows: increase of pressure from 0 to 24 bar in 6 hours and then squeezing at 24 bar for 6 hours.
High stearic acid stearin fractions were obtained (Products 1a, 1b, 1c of the invention) and high oleic acid olein fractions were obtained (Products 2a, 2b, 2c). See Table 2.

**Table 2. Dry fractionation of shea fatty acids obtained via enzymatic hydrolysis of shea olein and distillation. Fractionation was performed at different temperatures.**

| Fraction | Distillate of example 1 | Stearin Product 1a | Stearin Product 1b | Stearin Product 1c | Comparative | Olein Product 2a | Olein Product 2b | Olein Product 2c | Comparative |
|---|---|---|---|---|---|---|---|---|---|
| FAME analysis | | | | | | | | | |
| C12:0 | 0.2 | 0.1 | 0.1 | 0.1 | * | 0.2 | 0.2 | 0.2 | 0.1 |
| C14:0 | 0.1 | 0.1 | 0.1 | 0.1 | * | 0.2 | 0.2 | 0.1 | 0.1 |
| C16:0 | 5.7 | 5 | 4.7 | 4.5 | 0.5 | 5.9 | 6 | 6 | 1.4 |
| C18:0 | 28.7 | 63.6 | 69.8 | 70.4 | 98.3 | 10.3 | 12 | 14 | 1.8 |
| C18:1 | 54.4 | 25.1 | 20 | 19.8 | 0.1 | 69.5 | 68.3 | 66.7 | 82.6 |
| C18:2 | 8.9 | 4 | 3.2 | 3.1 | * | 11.2 | 11.1 | 10.8 | 13 |
| C18:3 | 0.1 | 0.1 | 0.1 | 0.1 | * | 0.6 | 0.3 | 0.3 | 0.1 |
| trans | 0.3 | 0.3 | 0.2 | 0.2 | * | 0.8 | 0.6 | 0.6 | 1.1 |
| C20:0 | 1.1 | 1.5 | 1.5 | 1.5 | 0.8 | 0.9 | 0.9 | 1 | 0.2 |
| C20:1cis | 0.4 | 0.2 | 0.2 | 0.2 | * | 0.5 | 0.5 | 0.5 | 0.4 |
| C22:0 | 0.1 | 0.1 | 0.1 | 0.1 | * | 0.1 | 0.1 | 0.1 | * |
| SAFA | 36.1 | 70.5 | 76.6 | 76.8 | 99.8 | 17.7 | 19.6 | 21.6 | 3.5 |
| MUFA | 54.8 | 25.3 | 20.2 | 19.9 | 0.1 | 70.1 | 69 | 67.3 | 78.8 |
| PUFA | 9 | 4.1 | 3.2 | 3.2 | 0 | 11.8 | 11.4 | 11.1 | 13.1 |

### Example 3

Acidolysis of palm mid-faction was carried out with the shea stearic acid concentrate of Example 2. The acidolysis reaction was performed using a lab scale packed bed reactor (PBR).

About 1200 gram of hard palm mid-fraction was blended with 1200 gram of stearic acid concentrate from Example 2 (Product 1c). To this blend, 0.15% (wt) demineralized water was added and the mixture was transferred to the feed vessel of the PBR equipment. The PBR column was filled with 5 gram of lipase from *Rhizopus oryzae* immobilized on an Accurel support and the temperature was set at 70°C. The feed was passed through the column at an average flow rate of about 12.7 g/hours and the acidolyis reaction was monitored by measuring the level of 1,3-dipalmitoyl-2-oleoyl glyceride (POP) in the product. The excess of fatty acids in the interesterified product were distilled off by means of short path distillation. The interesterified palm mid fraction (residue product obtained after distillation) was solvent fractionated as follows in order to obtain the desired fraction meeting the required characteristics.

About 400 gram of the interesterified oil was dissolved in 2 kg of acetone at 50°C and was cooled down to 8-12°C and kept at this temperature for 30 min. After this, the formed crystals were filtered off and the supernatant was heated up to 50°C and then cooled down to 20-24°C and kept at this temperature for 30 min. The formed crystals were filtered off and the solvent from the supernatant was evaporated that resulted in the main product. The overall yield was about 57%, while the top stearin was about 10% and olein fraction about 33%. The analytical data for the products are contained in Table 3.

**Table 3. Enzymatic cocoa butter analogue (eCCB) obtained via acidolysis of palm mid-fraction with shea olein stearic acid concentrate followed by distillation and fractionation.**

| | | Solvent fractionation | | |
|---|---|---|---|---|
| | Interesterified palm mid-fraction | Olein | eCCB mid fraction | Stearin |
| C12:0 | 0.1 | 0.2 | 0.1 | 0 |
| C14:0 | 0.5 | 0.8 | 0.4 | 0.5 |
| C16:0 | 29.2 | 27.9 | 28.6 | 42.4 |
| C18:0 | 29.3 | 18.3 | 32.8 | 44.3 |
| C18:1 | 35.7 | 43.9 | 34.4 | 11 |
| C18:2 | 4.1 | 7.8 | 2.5 | 0.3 |
| C18:3 | 0.1 | 0.2 | 0 | 0 |
| C20:0 | 0.7 | 0.5 | 0.8 | 1 |
| C20:1cis | 0.1 | 0.1 | 0 | 0 |
| C22:0 | 0.1 | 0 | 0.1 | 0.1 |
| SAFA | 60.1 | 47.8 | 63 | 88.7 |
| MUFA | 35.8 | 44.1 | 34.5 | 11 |
| PUFA S | 4.1 | 8 | 2.5 | 0.3 |
| Total Trans | 0.2 | 0.3 | 0.1 | 0.1 |
| Silver phase data HPLC* | | | | |
| SOS | * | * | 79.8 | * |
| SOO | * | * | 9.4 | * |
| OSO | * | * | 0.24 | * |
| SSS | * | * | 1.5 | * |
| SLS | * | * | 3.9 | * |
| SSL | * | * | 0.3 | * |
| SOL | * | * | 1.9 | * |
| OOO | * | * | 0.7 | * |
| SSO | * | * | 1.7 | * |
| 3plus double bond in the triglyceride | * | * | 0.6 | * |

| Triglyceride composition GC** | | | | |
|---|---|---|---|---|
| MPP | 0.2 | 0.2 | 0.2 | 0.4 |
| MOM | 0.1 | 0.2 | 0 | 0 |
| PPP | 2 | 0.5 | 1.1 | 11.2 |
| MOP | 0.7 | 1.5 | 0.4 | 0.1 |
| MLP | 0.1 | 0.3 | 0 | 0.2 |
| PPSt | 3.7 | 0.3 | 1 | 30.6 |
| POP | 16.9 | 19.7 | 17.8 | 2.9 |
| PLP | 2 | 4.1 | 0.9 | 0.1 |
| PStSt | 2.4 | 0.3 | 0.7 | 22.4 |
| POSt | 29.5 | 13.2 | 41.1 | 12.4 |
| POO | 9.2 | 20.7 | 4.2 | 0.2 |
| PLSt | 2.2 | 4.6 | 1.6 | 0.1 |
| PLO | 2 | 4.3 | 0.7 | 0 |
| PLL | 0.1 | 0.5 | 0 | 0 |
| StStSt | 0.4 | 0.1 | 0.3 | 3.7 |
| StOSt | 15.4 | 2.4 | 22.6 | 14.1 |
| StOO | 7.8 | 17.8 | 3.9 | 0.1 |
| StLSt | 1.1 | 1.6 | 1 | 0.3 |
| OOO | 1 | 2.4 | 0.4 | 0 |
| StLO | 1.8 | 3.8 | 0.7 | 0 |
| OLO | 0.3 | 0.7 | 0.1 | 0 |
| StLL | 0 | 0.2 | 0 | 0 |
| AOSt | 0.5 | 0 | 0.8 | 0.4 |
| S26N20 NMR | 41 | * | 72 | * |
| S26N25 NMR | 30 | * | 66 | * |
| S26N30 NMR | 17 | * | 38 | * |
| S26N35 NMR | 8 | * | 1 | * |

| | | | | |
|---|---|---|---|---|
| *S = saturated fatty acid; O = oleic acid; L= linoleic acid; ** Triglyceride composition MPP, etc, was determined by GC (ISO 23275) and includes triglycerides having the same fatty acids in different positions e.g., MPP includes MPP and PMP; M, O, P, St, L and A refer to myristic, oleic, palmitic, stearic, linoleic and arachidic acids, respectively S26Nx refers to solid fat content determined according to ISO 8291-1 (beta stabilized at 26°C) at x °C | | | | |

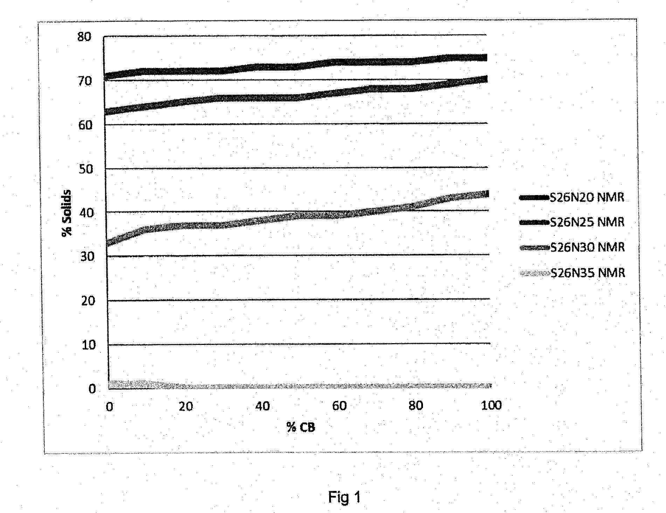

Figure 1 is a plot of % solids at temperatures 20, 25, 30 and 35 °C for fat blends comprising 0-100% cocoa butter (CB) and 100-0% of the eCCB ("enzymic cocoa butter") of Example 3 showing the compatibility of the enzymatic cocoa butter analogue with cocoa butter (CB).

### Example 4

Acidolysis of palm stearin was carried out with the shea oleic acid concentrate of Example 2. The acidolysis reaction was performed using a lab scale packed bed reactor (PBR).

About 1290 gram of hard palm stearin with iodine value (IV) number of about 14 was blended with about 1810 gram of oleic acid concentrate from Example 2 (Product 2a). To this blend, about 0.15% (wt) demineralized water was added and the mixture was transferred to the feed vessel of the PBR equipment. The PBR column was filled with 5 gram of lipase from *Rhizopus oryzae* immobilized on Accurel and the temperature was set at 60°C. The feed was passed through the column at an average flow rate of about 12.7 g/hours and the acidolyis reaction was monitored by measuring the level of carbon number C48 in the product. The excess of fatty acids in the interesterified product were distilled off by means of short path distillation. The interesterified hard palm stearin (the residue of the product obtained after distillation) was dry fractionated as follows in order to obtain the desired olein fraction meeting the required characteristics.

About 1000 gram of the interesterified oil was dry fractionated. The oil was first heated to 70°C and then cooled down to 37 - 42°C as follows:
from 70°C to 42 - 47°C in about 2-5 hours, hold for 2-6 hours at 42 - 47°C and then cooled further to 37 - 42°C in 5-10 hours and hold at this temperature for about 5-10 hours.
The crystals formed were separated by using a lab scale filter press. The slurry was pressed using the following program: increase pressure from 0 - 24 bar in 60 min and squeezing at 24 bar for 30 min.
In this way, about 87% olein product was obtained. The analytical results are shown in table 4.

**Table 4. Enzymatic interesterified palm stearin obtained via acidolysis containing OSO and SSO type of triglycerides.**

| | Palm stearin | Interesterified Palm stearin | Olein fraction = product | Stearin fraction |
|---|---|---|---|---|
| Fractionation Temp (°C) | | | 37-42 | |
| Yield in % | | | 88.0 | 12.0 |

| FAME composition | | | | |
|---|---|---|---|---|
| C12:0 | 0.1 | 0.1 | 0.2 | 0.1 |
| C14:0 | 1.3 | 0.7 | 0.7 | 0.8 |
| C16:0 | 81.1 | 47.2 | 41.8 | 79.4 |
| C18:0 | 4.9 | 4.0 | 3.7 | 5.8 |
| C18:1cis | 9.8 | 41.6 | 46.8 | 12.0 |
| C18:2cis | 2.1 | 4.4 | 5.0 | 1.1 |
| C18:3cis | 0 | 0.0 | 0.0 | 0.0 |
| C20:0 | 0.3 | 0.3 | 0.3 | 0.4 |
| C20:1cis | 0 | 0.2 | 0.2 | 0.1 |
| C22:0 | 0 | 0.0 | 0.0 | 0.1 |
| C24:0 | 0 | 0.0 | 0.0 | 0.0 |
| SAFA | 88 | 52.7 | 47.1 | 86.8 |
| MUFA | 9.8 | 41.9 | 46.7 | 12.1 |
| PUFA | 2.2 | 4.5 | 5.0 | 1.1 |
| Total Trans | 0.1 | 0.5 | 0.6 | 0.2 |

| Silver phase HPLC | | | | |
|---|---|---|---|---|
| SOS | 12.4 | * | 2.7 | * |
| SOO | 4 | * | 9.7 | * |
| OSO | 0.1 | * | 24.3 | * |
| SSS | 77.2 | * | 6.9 | * |
| SLS | 1.6 | * | 0.5 | * |
| SSL | 0.2 | * | 3.2 | * |
| SOL | 1.1 | * | 7.6 | * |
| OOO | 0.4 | * | 9.4 | * |
| SSO | 2.1 | * | 31.0 | * |
| 3 plus double bond in the triglyceride | 0.9 | * | 4.1 | * |

| Carbon number GC | | | | |
|---|---|---|---|---|
| C46 | 3.3 | 0.9 | 0.7 | 2.3 |
| C48 | 61.9 | 15.0 | 6.0 | 58.8 |
| C50 | 24.2 | 35.0 | 36.2 | 27.2 |
| C52 | 8.6 | 36.3 | 41.7 | 9.0 |
| C54 | 2 | 11.8 | 14.0 | 2.5 |
| C56 | 0 | 1.0 | 1.2 | 0.1 |

## Claims

1. A fatty acid composition comprising:
(i) from 60 % to 80 % by weight stearic acid;
(ii) from 3 to 30% by weight oleic acid; and
(iii) less than 10 % by weight palmitic acid.

2. Composition as claimed in Claim 1, wherein the fatty acids in the composition are non-hydrogenated.

3. Composition as claimed in Claim 1 or Claim 2, which comprises from 10 to 30 % by weight oleic acid.

4. Composition as claimed in any one of Claims 1 to 3, which comprises from 2 to 7 % by weight palmitic acid.

5. Composition as claimed in any one of Claims 1 to 4, which comprises from 1 to 5 % by weight linoleic acid.

6. Composition as claimed in any one of Claims 1 to 5, which comprises from 1 to 3 % by weight arachidic acid.

7. Composition as claimed in any one of Claims 1 to 6, which is obtainable from shea olein.

8. A process for producing the fatty acid composition of any one of the preceding claims, comprising the enzymic hydrolysis of a triglyceride.

9. Process as claimed in Claim 8, which also produces a second fatty acid composition comprising greater than 63% by weight oleic acid, greater than 4% by weight linoleic acid and greater than 2% by weight stearic acid.

10. Process as claimed in Claim 9, wherein the second fatty acid composition comprises from 63 to 80 % by weight oleic acid, from 5 to 20 % by weight linoleic acid and from 5 to 20 % by weight stearic acid.

11. Process as claimed in any one of Claims 8 to 10 comprising:
a) hydrolyzing a fat comprising at least 20% stearic acid based on the weight of the fatty acids present in the fat;
b) distillation of the product of step a); and
c) fractionation of the product of step b).

12. Process as claimed in Claim 11, wherein the fat of step a) is shea butter and/or a fraction thereof.

13. Use of a composition as claimed in any one of Claims 1 to 7 in the preparation of a triglyceride.

14. Method for the preparation of a triglyceride comprising an enzymic acidolysis reaction between: a fat with at least 30% by weight of oleic acid in the 2- position based on total C12 to C22 fatty acids at the 2- position; and the fatty acid composition of any one of Claims 1 to 7.

15. Method for the preparation of a triglyceride comprising an enzymic acidolysis reaction between: a fat with at least 20-40% by weight of C12-C22 saturated fatty acids in 2- position based on total C12 to C22 fatty acids at the 2- position; and the second fatty acid composition as defined in Claim 9 or Claim 10.

## Patentansprüche

1. Fettsäurezusammensetzung, Folgendes umfassend:
(i) 60 bis 80 Gew.-% Stearinsäure;
(ii) 3 bis 30 Gew.-% Ölsäure; und
(iii) weniger als 10 Gew.-% Palmitinsäure.

2. Zusammensetzung nach Anspruch 1, wobei die Fettsäuren in der Zusammensetzung nicht gehärtet sind.

3. Zusammensetzung nach Anspruch 1 oder 2, die 10 bis 30 Gew.-% Ölsäure umfasst.

4. Zusammensetzung nach einem der Ansprüche 1 bis 3, die 2 bis 7 Gew.-% Palmitinsäure umfasst.

5. Zusammensetzung nach einem der Ansprüche 1 bis 4, die 1 bis 5 Gew.-% Linolsäure umfasst.

6. Zusammensetzung nach einem der Ansprüche 1 bis 5, die 1 bis 3 Gew.-% Arachinsäure umfasst.

7. Zusammensetzung nach einem der Ansprüche 1 bis 6, die aus Shea-Olein erhältlich ist.

8. Vorgang zum Erzeugen der Fettsäurezusammensetzung nach einem der vorhergehenden Ansprüche, umfassend die enzymatische Hydrolyse eines Triglycerids.

9. Vorgang nach Anspruch 8, die auch eine zweite Fettsäurezusammensetzung erzeugt, die mehr als 63 Gew.-% Ölsäure, mehr als 4 Gew.-% Linolsäure und mehr als 2 Gew.-% Stearinsäure umfasst.

10. Vorgang nach Anspruch 9, wobei die zweite Fettsäurezusammensetzung 63 bis 80 Gew.-% Ölsäure, 5 bis 20 Gew.-% Linolsäure und 5 bis 20 Gew.-% Stearinsäure umfasst.

11. Vorgang nach einem der Ansprüche 8 bis 10, Folgendes umfassend:
a) Hydrolysieren eines Fetts, das wenigstens 20 % Stearinsäure bezogen auf das Gewicht der in dem Fett vorliegenden Fettsäuren umfasst;
b) Destillieren des Produkts aus Schritt a); und
c) Fraktionieren des Produkts aus Schritt b).

12. Vorgang nach Anspruch 11, wobei das Fett aus Schritt a) Sheabutter und/oder ein Anteil davon ist.

13. Verwendung einer Zusammensetzung nach einem der Ansprüche 1 bis 7 beim Herstellen eines Triglycerids.

14. Verfahren zum Herstellen eines Triglycerids, umfassend eine enzymatische Säurehydrolysereaktion zwischen: einem Fett mit wenigstens 30 Gew.-% Ölsäure an der 2-Position bezogen auf die gesamten C12- bis C22-Fettsäuren an der 2-Position; und der Fettsäurezusammensetzung nach einem der Ansprüche 1 bis 7.

15. Verfahren zum Herstellen eines Triglycerids, umfassend eine enzymatische Säurehydrolysereaktion zwischen: einem Fett mit wenigstens 20-40 Gew.-% der gesättigten C12-C22-Fettsäuren in der 2-Position bezogen auf die gesamten C12- bis C22-Fettsäuren an der 2-Position; und der zweiten Fettsäurezusammensetzung nach Anspruch 9 oder 10.

## Revendications

1. Composition d'acides gras comprenant :
(i) de 60 % à 80 % en poids d'acide stéarique ;
(ii) de 3 à 30 % en poids d'acide oléique ; et
(iii) moins de 10 % en poids d'acide palmitique.

2. Composition selon la revendication 1, dans laquelle les acides gras dans la composition sont non hydrogénés.

3. Composition selon la revendication 1 ou la revendication 2, qui comprend de 10 à 30 % en poids d'acide oléique.

4. Composition selon l'une quelconque des revendications 1 à 3, qui comprend de 2 à 7 % en poids d'acide palmitique.

5. Composition selon l'une quelconque des revendications 1 à 4, qui comprend de 1 à 5 % en poids d'acide linoléique.

6. Composition selon l'une quelconque des revendications 1 à 5, qui comprend de 1 à 3 % en poids d'acide arachidique.

7. Composition selon l'une quelconque des revendications 1 à 6, qui peut être obtenue à partir d'oléine de karité.

8. Processus pour produire la composition d'acides gras selon l'une quelconque des revendications précédentes, comprenant l'hydrolyse enzymatique d'un triglycéride.

9. Processus selon la revendication 8, qui produit également une deuxième composition d'acides gras comprenant plus de 63 % en poids d'acide oléique, plus de 4 % en poids d'acide linoléique et plus de 2 % en poids d'acide stéarique.

10. Processus selon la revendication 9, dans lequel la deuxième composition d'acides gras comprend de 63 à 80 % en poids d'acide oléique, de 5 à 20 % en poids d'acide linoléique et de 5 à 20 % en poids d'acide stéarique.

11. Processus selon l'une quelconque des revendications 8 à 10 comprenant :
a) l'hydrolysation d'une matière grasse comprenant au moins 20 % d'acide stéarique par rapport au poids des acides gras présents dans la matière grasse ;
b) la distillation du produit de l'étape a) ; et
c) le fractionnement du produit de l'étape b).

12. Processus selon la revendication 11, dans lequel la matière grasse de l'étape a) est du beurre de karité et/ou une fraction de celui-ci.

13. Utilisation d'une composition selon l'une quelconque des revendications 1 à 7 dans la préparation d'un triglycéride.

14. Procédé pour la préparation d'un triglycéride comprenant une réaction d'acidolyse enzymatique entre : une matière grasse avec au moins 30 % en poids d'acide oléique en position 2- par rapport aux acides gras en C12 à C22 totaux à la position 2- ; et la composition d'acides gras selon l'une quelconque des revendications 1 à 7.

15. Procédé pour la préparation d'un triglycéride comprenant une réaction d'acidolyse enzymatique entre : une matière grasse avec au moins 20 à 40 % en poids d'acides gras saturés en C12 à C22 en position 2- par rapport aux acides gras en C12 à C22 totaux à la position 2- ; et la deuxième composition d'acides gras selon la revendication 9 ou la revendication 10.
